# EUROPEAN PATENT APPLICATION

(11) **EP 4 568 128 A1**
(43) Date of publication of application: **11.06.2025**
(21) Application number: 23850370.0
(22) Date of filing: 31.07.2023
(51) Int. Cl.: H04B 7/0417, H04B 7/0404, H04B 7/0408, H04W 8/24, H04W 24/08, H04W 24/10

(54) **METHOD AND DEVICE FOR BEAM REPORTING IN WIRELESS COMMUNICATION SYSTEM**

(30) Priority: 05.08.2022 KR 20220098104
(71) Applicant: LG Electronics Inc., Yeongdeungpo-gu Seoul 07336 (KR)
(72) Inventor: KANG, Jiwon, Seoul 06772 (KR); GO, Seongwon, Seoul 06772 (KR)
(74) Representative: Frenkel, Matthias Alexander
(86) International application number: PCT/KR2023/011136
(87) International publication number: WO 2024/029868

(57) **Abstract**

A method performed by a user equipment (UE) in a wireless communication system comprises receiving configuration information related to Channel State Information (CSI), receiving at least one DownLink-Reference Signal (DL RS), computing the CSI based on a measurement for the at least one DL RS, and reporting the CSI. The CSI includes resource indicators related to each group of one or more groups. The resource indicators are related to simultaneous transmission based on spatial filters by the UE.

## Description

### [TECHNICAL FIELD]

The present disclosure relates to a method and a device for beam reporting in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

In Rel-17 MIMO, a panel-specific beam report has been introduced, which improves an existing beam reporting method. Specifically, a UE capability (set) index corresponding to a UE panel or a panel type is reported together, and an UL/DL panel selection of a UE can be supported based on the corresponding information. However, information reported through the existing panel-specific beam report is information that does not consider simultaneous transmission across multiple panels (STxMP) of the UE.

### [DISCLOSURE]

### [TECHNICAL PROBLEM]

As described above, the STxMP is not considered in the information reported through the existing panel-specific beam report. Whether the STxMP is supported by a UE cannot be determined based on the reported information (e.g., CRIs, SSBRIs).

In other words, when using the existing beam reporting method, the UE cannot report beam information (e.g., CRIs, SSBRIs), in which the STxMP is supported, to the base station. Therefore, an operation based on the beam information (e.g., CRIs, SSBRIs), in which the STxMP is supported, cannot be supported.

An object of the present disclosure is to provide a method of reporting a beam (e.g., CRI(s) and/or SSBRI(s)) in which simultaneous transmission by a UE is supported.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method performed by a user equipment (UE) in a wireless communication system according to an embodiment of the present disclosure comprises receiving configuration information related to Channel State Information (CSI), receiving at least one DownLink-Reference Signal (DL RS), computing the CSI based on a measurement for the at least one DL RS, and reporting the CSI.

The configuration information includes information related to a group based beam reporting.

The CSI includes resource indicators related to each group of one or more groups. The resource indicators are related to simultaneous transmission based on spatial filters by the UE.

The configuration information may include a report quantity related to the CSI.

The report quantity may be set to i) 'cri'-'RSRP (Reference Signal Received Power)', ii) 'ssb-Index'-'RSRP', iii) 'cri'-'RSRP'-'Index' or iv) 'ssb-Index'-'RSRP'-'Index'.

The cri may be a CSI-RS Resource Indicator (CRI), and the ssb-Index may be a SS/PBCH Block Resource Indicator (SSBRI).

The Index may be an index of a UE capability value set.

A maximum supported number of SRS antenna ports may be indicated based on the index of the UE capability value set.

The resource indicators may include i) two CRIs or ii) two SSBRIs.

CSI-RS resources and/or SSB resources of the each group are able to be applied for the simultaneous transmission.

CSI-RS resources and/or SSB resources of the each group are able to be received simultaneously by the UE.

The simultaneous transmission may be performed based on a UE capability.

The UE capability may be related to the maximum supported number of SRS antenna ports.

The CSI may further include the index of the UE capability value set.

Based on the information related to the group based beam reporting, the CSI including first resource indicators or second resource indicators related to the each group may be reported.

Resources based on the first resource indicators are able to be received simultaneously by the UE and be applied for the simultaneous transmission.

Resources based on the second resource indicators are able to be applied for the simultaneous transmission.

The information related to the group based beam reporting may represent a first value related to a reporting of the first resource indicators or a second value related to a reporting of the second resource indicators.

The resource indicators may be based on two resource indicators. Based on the two resource indicators, one CSI-RS or one SSB may be selected from each of two CSI resource sets.

A user equipment (UE) operating in a wireless communication system according to another embodiment of the present disclosure includes one or more transceivers, one or more processors, and one or more memories operably connectable to the one or more processors and storing instructions that configure the one or more processors to perform operations based on being executed by the one or more processors.

The operations comprise receiving configuration information related to Channel State Information (CSI), receiving at least one DownLink-Reference Signal (DL RS), computing the CSI based on a measurement for the at least one DL RS, and reporting the CSI.

The configuration information includes information related to a group based beam reporting.

The CSI includes resource indicators related to each group of one or more groups. The resource indicators are related to simultaneous transmission based on spatial filters by the UE.

A device according to another embodiment of the present disclosure includes one or more memories, and one or more processors operably connected to the one or more memories.

The one or more memories include instructions that configure the one or more processors to perform operations based on being executed by the one or more processors.

The operations comprise receiving configuration information related to Channel State Information (CSI), receiving at least one DownLink-Reference Signal (DL RS), computing the CSI based on a measurement for the at least one DL RS, and reporting the CSI.

The configuration information includes information related to a group based beam reporting.

The CSI includes resource indicators related to each group of one or more groups. The resource indicators are related to simultaneous transmission based on spatial filters by the UE.

One or more non-transitory computer readable mediums according to another embodiment of the present disclosure stores one or more instructions.

The one or more instructions executable by one or more processors configure the one or more processors to perform operations.

The operations comprise receiving configuration information related to Channel State Information (CSI), receiving at least one DownLink-Reference Signal (DL RS), computing the CSI based on a measurement for the at least one DL RS, and reporting the CSI.

The configuration information includes information related to a group based beam reporting.

The CSI includes resource indicators related to each group of one or more groups. The resource indicators are related to simultaneous transmission based on spatial filters by the UE.

A method performed by a base station in a wireless communication system according to another embodiment of the present disclosure comprises transmitting configuration information related to Channel State Information (CSI), transmitting at least one DownLink-Reference Signal (DL RS), and receiving the CSI.

The configuration information including information related to a group based beam reporting. The CSI is computed on based on a measurement of a user equipment (UE) for the at least one DL RS.

The CSI includes information for Resource Indicators related to each group of one or more groups. The Resource Indicators are related to simultaneous transmission based on spatial filters by the UE.

A base station operating in a wireless communication system according to another embodiment of the present disclosure includes one or more transceivers, one or more processors, and one or more memories operably connectable to the one or more processors and storing instructions that configure the one or more processors to perform operations based on being executed by the one or more processors.

The operations comprise transmitting configuration information related to Channel State Information (CSI), transmitting at least one DownLink-Reference Signal (DL RS), and receiving the CSI.

The configuration information including information related to a group based beam reporting. The CSI is computed on based on a measurement of a user equipment (UE) for the at least one DL RS.

The CSI includes information for Resource Indicators related to each group of one or more groups. The Resource Indicators are related to simultaneous transmission based on spatial filters by the UE.

### [ADVANTAGEOUS EFFECTS]

According to embodiments of the present disclosure, resource indicators related to simultaneous transmission by a UE is reported based on a group based beam reporting method.

Since whether to support STxMP of the UE can be determined based on the reported resource indicators, UL scheduling/UL transmission based on a beam in which the STxMP is supported after the reporting operation can be performed.

Since the resource indicators related to the simultaneous transmission by the UE are performed based on configuration related to an existing group based beam reporting method, implementation complexity required to support a reporting of information related to whether to support the STxMP can be minimized.

Effects which may be obtained by the present disclosure are not limited to the aforementioned effects, and other technical effects not described above may be evidently understood by a person having ordinary skill in the art to which the present disclosure pertains from the following description.

### [BRIEF DESCRIPTION OF THE DRAWINGS]

FIG.1 illustrates an example of beamforming using SSB and CSI-RS.
FIG. 2 is a flowchart showing an example of a DL BM procedure using SSB.
FIG. 3 illustrates a signaling procedure according to an embodiment of the present disclosure.
FIG. 4 is a flow chart illustrating a method performed by a user equipment according to an embodiment of the present disclosure.
FIG. 5 is a flow chart illustrating a method performed by a base station according to another embodiment of the present disclosure.
FIG. 6 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

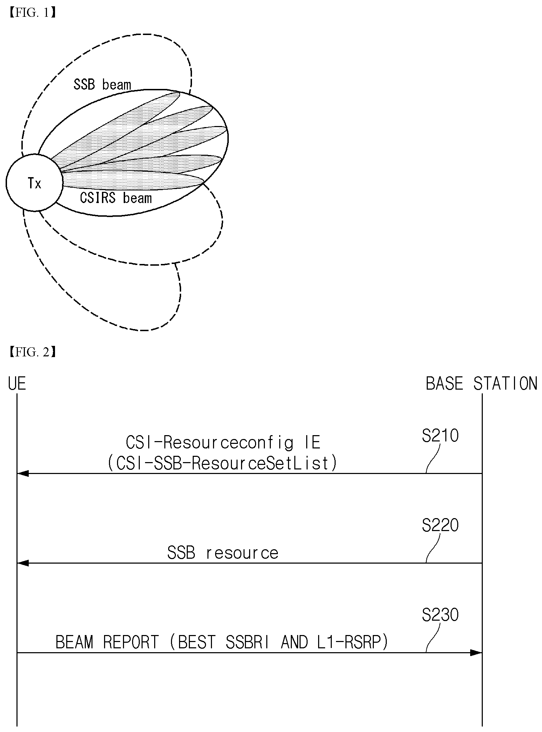

FIG.1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).
- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

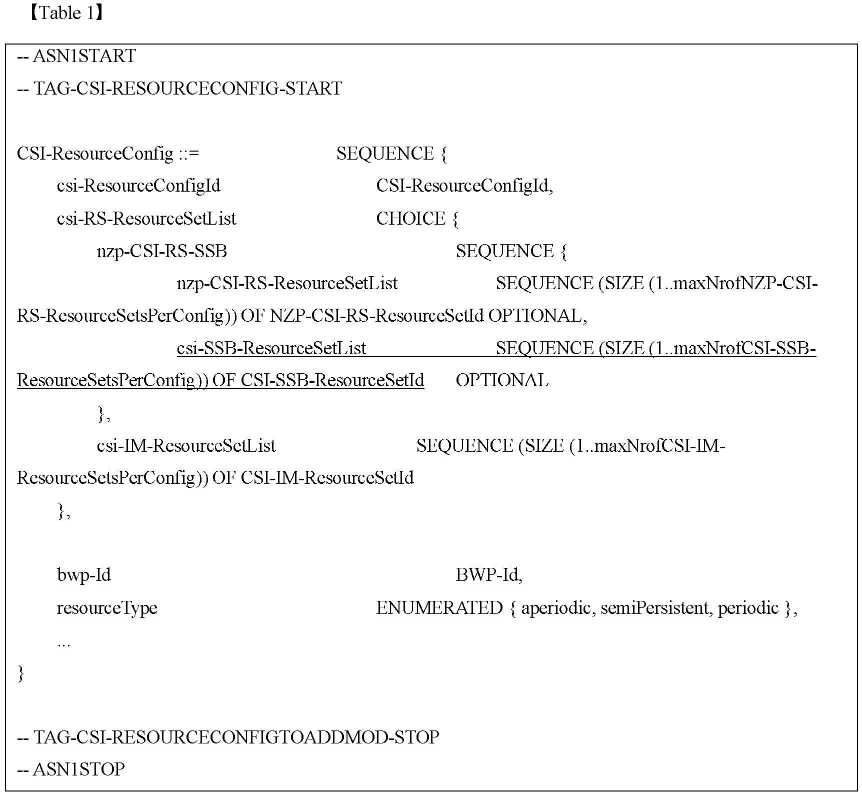

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives from the eNB the SSB resource based on the CSI-SSB-ResourceSetList (S220).
- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP', the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

### BM enhancements in NR Rel-16

The DL/UL beam indication standardized in 3GPP NR Rel-15 has been designed to separately indicate beams for each DL/UL channel/RS resource to ensure beam indication flexibility, and this indication method has been designed separately for each channel/RS.

This design direction eventually had the problem that a base station had to indicate a beam change for each channel/RS resource to multiple UEs communicating with the base station using a single beam in order to change a serving beam for the multiple UEs, which resulted in large signaling overhead and large beam change latency. Along with the UL beam change, UL power control-related parameters, especially pathloss RS (PL RS), had to be changed for each UL channel/RS, which also resulted in signaling overhead/latency problems. To complement these drawbacks, five features were introduced in Rel-16. Table 2 below shows the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, and UE uses one source RS for PDCCH/PDSCH beam as for the spatial relation RS and the pathloss reference RS. Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel. 15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used |

| |
|---|
| across all PUCCH resources, e.g. one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all |
| the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. In Rel.15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS was introduced in Rel-16. Using this MAC CE, spatial relation RSs for a set of SRS resources can be updated together. |
| 5. MAC CE based PL RS update for aperiodic/semi-persistent SRS and PUSCH |
| Fifth, in Rel.15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC CEs were introduced for SRS and PUSCH, respectively. |

In Rel-16, enhancements related to beam reporting were made in addition to the beam/PL RS indication-related enhancements described above. In Rel-15, a mode in which a UE measures/reports L1-RSRP for each beam RS is supported. However, in an environment with high inter-beam interference, it is difficult to guarantee that a specific beam RS has good quality as a serving beam just because L1-RSRP, i.e., a reception intensity of the specific beam RS is high. In other words, the UE may select a beam, that has a high reception intensity but has high beam interference, and report the beam to a base station. To overcome this drawback, Rel-16 supports a new beam reporting mode in which the base station configures resources for interference measurement as well as RSs for channel measurement, and the UE measures L1-SINR for the channel resources and the interference resources based on this and reports several RSs with high L1-SINR value.

### BM enhancements in NR Rel-17

As described above, various BM enhancements were made in Rel-16. In particular, the features were created that can significantly reduce the signaling overhead/latency in relation to the beam indication method. However, channel/RS-unified beams are still not configured/indicated to a UE operating with a single serving beam.

Based on this motivation, Rel-17 will standardize a channel/RS unified beam configuration/indication method. In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.
- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

In the present disclosure, '/' means 'and', 'or', or 'and/or' depending on the context.

In the present disclosure, QCL type-D RS or TCI state, or TCI for short, may mean a spatial parameter, i.e., a QCL reference RS from a beam perspective. The QCL reference RS may be extended and interpreted as a reference RS or source RS for the corresponding parameter or other beam/space related parameters.

In the present disclosure, the 'beam' may mean a spatial filter determined based on the reference RS or the source RS. The spatial filter may include a spatial domain filter, a spatial domain transmission filter, and a spatial domain receive filter.

For example, a beam related to UL may be referred to as i) a spatial filter (for uplink transmission or for uplink reception), ii) a spatial domain filter (for uplink transmission or for uplink reception), iii) an uplink spatial domain transmission filter, iv) an uplink spatial domain receive filter, v) an uplink transmit spatial filter (UL Tx spatial filter) or vi) an uplink receive spatial filter (UL Rx spatial filter).

For example, a beam related to DL may be referred to as i) a spatial filter (for downlink transmission or for downlink reception), ii) a spatial domain filter (for downlink transmission or for downlink reception), iii) a downlink spatial domain transmission filter, iv) a downlink spatial domain receive filter, v) a downlink transmit spatial filter (DL Tx spatial filter) or vi) a downlink receive spatial filter (DL Rx spatial filter).

For example, when beam reciprocity is established, a DL beam and an UL beam may be equally referred to as a spatial filter or a spatial domain filter. Specifically, when the beam reciprocity is established, a specific UL beam may be the same as a specific DL beam. For example, a UL beam to be used for uplink transmission of a UE may be determined based on measurement of DL beams used for transmission of a base station. For example, a DL beam to be used for downlink transmission of the base station may be determined based on measurement of UL beams used for transmission of the UE.

In an environment, such as a low-frequency band, where analog beamforming is not used, an indication of QCL type-D RS may be omitted. In this case, QCL type-D RS in the present disclosure may be interpreted as a QCL reference RS (i.e., when only one reference RS exists in the TCI state, it may refer to the corresponding RS).

From a UL perspective, a TCI state (or TCI for short) may refer to a state including a reference/source RS for a UL beam. From the UL perspective, the TCI state may indicate a spatial relation RS (and pathloss RS) in the existing Rel-15/16. Here, the pathloss RS may be configured to be the same as the corresponding RS, or to be associated with the UL TCI state or to be included separately.

In Rel-17 MIMO, a beam reporting method supported in the existing release has been evolved, and thus a reporting enhancement method has been standardized to support uplink (UL) (and downlink (DL)) panel selection of the UE by reporting a UE capability (set) index corresponding to a UE panel or a panel type together and utilizing this. Hereinafter, this method is referred to as a panel-specific beam report for convenience.

The method assumes that the UE performs UL transmission using one panel at a moment for the purpose of supporting a rapid change of the UE panel. The above-described panel-specific beam report may be performed based on Table 3. In Table 3 below, a parameter corresponding to the 'UE capability (set) index' is referred to as 'Capability[Set]Index'. However, the parameter 'Capability[Set]Index' is a name for convenience of explanation, and the 'UE capability (set) index' may be referred to as another term (e.g., Index).

For the convenience of description, the index ('UE capability (set) index') is referred to as 'C-ID' below. The UE may report, to the base station, how many C-IDs the UE has, as a UE capability report.

Each C-ID represents the maximum number of SRS ports supported by the UE (the maximum number of SRS antenna ports supported by the UE). That is, Rel-17 C-ID is defined only for panel(s) with a different number of SRS ports.

For example, it may be assumed that 4 panel UEs include panel#0 (2 ports), panel#1 (2 ports), panel#2 (4 ports), and panel#3 (4 ports). In this instance, the panel#0 and the panel#1 may be mapped to C-ID#0, and the panel#2 and the panel#3 may be mapped to C-ID#1.

The UE may report, to the base station, C-ID#0 with max supported SRS ports=2 and C-ID#1 with max supported SRS ports=4. Based on this, C-ID and UE capability information related to this (e.g., the maximum number of SRS ports) may be understood as a report for a type of panel.

The panel-specific beam report in Table 3 below corresponds to an operation of reporting (instantaneously/periodically) by including the C-ID reported as the UE capability in the beam report.

If the existing beam report is configured/indicated, the UE may operate as follows. The UE reports, to the base station, i) indexes (i.e., CRI or SSBRI) of RSs related to the best N BS Tx beams and ii) L1-RSRP or L1-SINR values which are reception quality values of the corresponding RSs. In this instance, the N RS indexes may be selected/reported regardless of the UE Rx panel, where N may be set to a value 1 to 4 and configured by the base station to the UE.

If the panel-specific beam report is configured/indicated, the UE may operate as follows. The UE reports, to the base station, L1-RSRP/L1-SINR(s) related to the CRI/SSBRI(s) and optimum C-ID for each CRI/SSBRI. For example, for N=4, the UE may report the first two CRIs as C-ID#0 and the remaining two CRIs as C-ID#1. In this example, the four CRIs reported by the UE may be interpreted as follows in relation to the UE panel.

The first two CRIs reported as C-ID#0 may mean the following. If the base station receives (and/or transmits) using one of beams corresponding to the first two CRIs, 1) the UE may prefer to transmit using the panel corresponding to C-ID#0 (or one of the corresponding panels), or 2) using a panel corresponding to C-ID#0 (or one of the corresponding panels) may be advantageous over using a panel corresponding to another C-ID (i.e., C-ID#1).

The remaining two CRIs reported as C-ID#1 may mean the following.

If the base station receives (and/or transmits) using a beam corresponding to one of the remaining two CRIs, 1) the UE may prefer to transmit using the panel corresponding to C-ID#1 (or one of the corresponding panels), or 2) using a panel corresponding to C-ID#1 (or one of the corresponding panels) may be advantageous over using a panel corresponding to another C-ID (i.e., C-ID#1).

**[Table 3]**

| | |
|---|---|
| 5.2.1.4.3 L1-RSRP Reporting | |
| For L1-RSRP computation | |
| | - the UE may be configured with CSI-RS resources, SS/PBCH Block resources or both CSI-RS and SS/PBCH block resources, when resource-wise quasi co-located with 'type C' and 'typeD' when applicable. |
| | - the UE may be configured with CSI-RS resource setting up to 16 CSI-RS resource sets having up to 64 resources within each set. The total number of different CSI-RS resources over all resource sets is no more than 128. |
| For L1-RSRP reporting, if the higher layer parameter *nrofReportedRS* in *CSI-ReportConfig* is configured to be one, the reported L1-RSRP value is defined by a 7-bit value in the range [-140, -44] dBm with 1dB step size, if the higher layer parameter *nrofReportedRS* is configured to be larger than one, or if the higher layer parameter | |
| | *groupBasedBeamReporting* is configured as 'enabled', or if the higher layer parameter *groupBasedBeamReporting-r17* is configured, the UE shall use differential L1-RSRP based reporting, where the largest measured value of L1-RSRP is quantized to a 7-bit value in the range [-140, -44] dBm with 1dB step size, and the differential L1-RSRP is quantized to a 4-bit value. The differential L1-RSRP value is computed with 2 dB step size with a reference to the largest measured L1-RSRP value which is part of the same L1-RSRP reporting instance. The mapping between the reported L1-RSRP value and the measured quantity is described in [11, TS 38.133]. |
| | When the higher layer parameter *groupBasedBeamReporting-r17*in *CSI-ReportConfig* is configured, the UE shall indicate the CSI Resource Set associated with the largest measured value of L1-RSRP, and for each group, CRI or SSBRI of the indicated CSI Resource Set is present first. |
| | If the higher layer parameter *timeRestrictionForChannelMeasurements* in *CSI-ReportConfig* is set to *"notConfigured",* the UE shall derive the channel measurements for computing L1-RSRP value reported in uplink slot n based on only the SS/PBCH or NZP CSI-RS, no later than the CSI reference resource, (defined in TS 38.211[4]) associated with the CSI resource setting. |
| | If the higher layer parameter *timeRestrictionForChannelMeasurements* in *CSI-ReportConfig* is set to *"Configured",* the UE shall derive the channel measurements for computing L1-RSRP reported in uplink slot *n* based on only the most recent, no later than the CSI reference resource, occasion of SS/PBCH or NZP CSI-RS (defined in [4, TS 38.211]) associated with the CSI resource setting. |

| | |
|---|---|
| When the UE is configured with [*NumberOfAdditionalPCI*], a CSI-SSB-ResourceSet configured for L1-RSRP reporting includes one or more sets of SSB indices where PCI indices are associated with the sets of SSB indices, respectively. | |
| **When the UE is configured with a *CSI-ReportConfig* with the higher layer parameter *reportQuantity* set to ' cri-RSRP-Capability[Set]Index' or 'ssb-Index-RSRP-Capability[Set]Index' an index of UE capability value set, indicating the maximum supported number of SRS antenna ports, is reported along with the pair of SSBRI/CRI and L1-RSRP.** | |
| 5.2.1.4.4 L1-SINR Reporting | |
| For L1-SINR computation, for channel measurement the UE may be configured with NZP CSI-RS resources and/or SS/PBCH Block resources, for interference measurement the UE may be configured with NZP CSI-RS or CSI-IM resources. | |
| | - for channel measurement, the UE may be configured with CSI-RS resource setting with up to 16 resource sets, with a total of up to 64 CSI-RS resources or up to 64 SS/PBCH Block resources. |
| For L1-SINR reporting, if the higher layer parameter *nrofReportedRS* in *CSI-ReportConfig* is configured to be one, the reported L1-SINR value is defined by a 7-bit value in the range [-23, 40] dB with 0.5 dB step size, and if the higher layer parameter *nrofReportedRS* is configured to be larger than one, or if the higher layer parameter *groupBasedBeamReporting* is configured as 'enabled', the UE shall use differential L1-SINR based reporting, where the largest measured value of L1-SINR is quantized to a 7-bit value in the range [-23, 40] dB with 0.5 dB step size, and the differential L1-SINR is quantized to a 4-bit value. The differential L1-SINR is computed with 1 dB step size with a reference to the largest measured L1-SINR value which is part of the same L1-SINR | |
| reporting instance. When NZP CSI-RS is configured for channel measurement and/or interference measurement, the reported L1-SINR values should not be compensated by the power offset(s) given by higher layer parameter *powerControOffsetSS* or *powerControlOffset.* | |
| When one or two resource settings are configured for L1-SINR measurement | |
| | - If the higher layer parameter *timeRestrictionFoiChannelMeasurements* in *CSI-ReportConfig* is set to *'notConfigured',* the UE shall derive the channel measurements for computing L1-SINR reported in uplink slot n based on only the SSB or NZP CSI-RS, no later than the CSI reference resource, (defined in TS 38.211[4]) associated with the CSI resource setting. |
| | - If the higher layer parameter *timeRestrictionForChannelMeasurements* in *CSI-* |

| | |
|---|---|
| | *ReportConfig* is set to *'configured',* the UE shall derive the channel measurements for computing L1-SINR reported in uplink slot n based on only the most recent, no later than the CSI reference resource, occasion of SSB or NZP CSI-RS (defined in [4, TS 38.211]) associated with the CSI resource setting. |
| | - If the higher layer parameter *timeRestrictionForInterferenceMeasurements* in *CSI-ReportConfig* is set to *'notConfigured',* the UE shall derive the interference measurements for computing L1-SINR reported in uplink slot n based on only the CSI-IM or NZP CSI-RS for interference measurement (defined in [4, TS 38.211]) or NZP CSI-RS for channel and interference measurement no later than the CSI reference resource associated with the CSI resource setting. |
| | - If the higher layer parameter *timeRestrictionForInterferenceMeasurements* in *CSI-ReportConfig* is set to *'configured',* the UE shall derive the interference measurements for computing the L1-SINR reported in uplink slot n based on the most recent, no later than the CSI reference resource, occasion of CSI-IM or NZP CSI-RS for interference measurement (defined in [4, TS 38.211]) or NZP CSI-RS for channel and interference measurement associated with the CSI resource setting. |
| **When the UE is configured a *CSI-ReportConfig* with the higher layer parameter *reportQuantity* set to ' cri-SINR-Capability[Set]Index' or 'ssb-Index-SINR-Capability[Set]Index' an index of UE capability value, indicating the maximum supported number of SRS antenna ports, is reported along with the pair of SSBRI/CRI and L1-SINR.** | |

Based on the panel-specific beam report, the base station may change/indicate the best DL beam (e.g., DL TCI state) and/or the best UL beam (e.g., UL TCI state, spatial relation RS).

A study on methods to support simultaneous transmission across multiple panels (STxMP) has begun in Rel-18 MIMO work item. The present disclosure provides a method of extending the Rel-17 panel-specific beam report to support/consider the STxMP.

The C-ID may be preferentially extended to express another UE panel (type) properties in addition to the maximum number of SRS ports. Through this, the C-ID may be extended so that different C-IDs can be assigned to panels supporting the same number of maximum SRS ports. This is because the STxMP can be supported for panels corresponding to the same number of UL ports. In addition, a combination of C-IDs in which the STxMP is capable and/or incapable may be reported to the base station. For example, the UE may configure and report the STxMP capable and/or incapable C-ID pairs. Through the report by the UE, the base station can know that the STxMP is capable (or incapable) when CRIs/SSBRIs corresponding to which C-IDs are used as UL TCIs (or spatial relations).

In addition to or instead of the above methods, STxMP-oriented reporting methods can be defined as below.

### Method 1

Based on reporting configuration of a base station, a UE reports information on CRIs/SSBRIs (or CRI/SSBRI pair/group) in which STxMP is capable and/or incapable, along with information on C-IDs (or C-ID pair/group) when performing the panel-specific beam report.

For example, the base station may request/configure beam reporting for STxMP capable panels to the UE. Based on this request, the UE may report an index (or pair/group index) for STxMP capable C-IDs (or C-ID pair/group). In this case, the UE may report the following i) and/or ii) together.

### i) CRI(s)/SSBRI(s) and/or ii) beam quality value related to the CRI(s)/SSBRI(s) (e.g., L1-RSRP, L1-SINR)

The i) CRI(s)/SSBRI(s) may be CRI(s)/SSBRI(s) preferred by the UE to be applied as UL TCIs (or spatial relation RSs). That is, the CRI(s)/SSBRI(s) may be applied as UL TCIs (or spatial relation RSs) for panels based on the STxMP capable C-IDs.

For another example, the base station may request/configure to report information about whether the STxMP is capable or incapable while requesting/configuring the beam reporting to the UE. "Whether the STxMP is capable or incapable' may be reported through a separate indicator or implicitly reported as grouping information for CRIs/SSBRIs and/or C-IDs.

For example, CRIs/SSBRIs and/or C-IDs belonging to the same group/pair/set may mean STxMP capable, and CRIs/SSBRIs and/or C-IDs not belonging to the same group/pair/set may mean STxMP incapable. Contrary to the above example, CRIs/SSBRIs and/or C-IDs belonging to the same group/pair/set may mean STxMP incapable, and CRIs/SSBRIs and/or C-IDs not belonging to the same group/pair/set may mean STxMP capable.

If N=4 and beam RS type=CSI-RS, the UE may report as in the following examples 1 to 4 based on the method 1.

Example 1) The UE may report information on pairs of four CRIs and two C-IDs as follows.

```
  {CRI#1(+L1-RSRP/SINR), CRI#3(+L1-RSRP/SINR), C-ID pair#0}
  {CRI#2(+L1-RSRP/SINR), CRI#4(+L1-RSRP/SINR), C-ID pair#1}
```

Example 2) The UE may divide four CRIs and four C-IDs into two groups and report them as follows.

```
  {CRI#1(+L1-RSRP/SINR)+C-ID#0, CRI#3(+L1-RSRP/SINR)+C-ID#1}
  {CRI#2(+L1-RSRP/SINR)+C-ID#2, CRI#4(+L1-RSRP/SINR)+C-ID#3}
 
```

Example 3) The UE may report CRI pairs 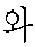 C-ID pairs as follows.
CRI pair#1+C-ID pair#0(+RSRPs), CRI pair#2+C-ID#1(+RSRPs), ...

In the examples, the C-ID pair may refer to STxMP capable or STxMP incapable C-IDs, or an index may be separately assigned to the pair.

In the example 2, CRIs/C-IDs belonging to the same group may mean STxMP capable or STxMP incapable.

In the example 3, the CRI pair may be information selected by the UE based on information on a plurality of CSI-RS resource pairs preset by the base station. For example, a combination of CSI-RS resources belonging to the CRI pair (candidate group) may mean a combination of beam RSs that the base station can 'simultaneously' receive respective UE Tx beams with Rx beams corresponding to the CSI-RS resources. Depending on the base station implementation, the CRI pair may correspond to a combination of beams transmitted from different TRPs or different panels of the same TRP.

For reference, the beam reporting method supported by the existing 3GPP NR standard is divided into a group based beam reporting method and a non-group based beam reporting method as shown below. In Rel-17, a method that evolves the group based beam reporting method considering simultaneous transmission of MTRP has been introduced (groupBasedBeamReporting-r17).

Specifically, two CSI resource sets may be configured to Resource Setting. Each CSI resource set may be considered as a set of beam RSs transmitted in each TRP. For example, the UE may receive information (e.g., CSI-AssociatedReportConfigInfo) including a first resource set and a second resource set. Each resource set may be related to CSI-RS or SSB. For example, resourcesForChannel in CSI-AssociatedReportConfigInfo may correspond to the first resource set, and resourcesForChannel2 in CSI-AssociatedReportConfigInfo may correspond to the second resource set. Specifically, the first resource set (e.g., resourceSet or csi-SSB-ResourceSet) may be configured based on the resourcesForChannel, and the second resource set (e.g., resourceSet2 or csi-SSB-ResourceSet2) may be configured based on the resourcesForChannel2.

The UE to which the report is configured/indicated selects one resource (i.e., CRI or SSBRI) from each CSI resource set and reports resource pair information on a group basis. That is, a resource pair belonging to the same group may correspond to a beam pair that supports simultaneous reception (and/or simultaneous transmission).

The method 1 can be extendedly applied to not only a report of 'simultaneous reception capable beam pair' but also a report of 'simultaneous transmission capable beam pair'. In other words, the existing group based beam report can also be performed for uplink. The following embodiments can be considered based on the method 1.

According to an embodiment, the UE may report a 'simultaneous reception and transmission capable beam pair' or a 'simultaneous transmission capable beam pair' based on the reporting configuration of the base station. As a specific example, the reporting configuration may include configuration related to the group based beam reporting. Based on the configuration related to the group based beam reporting (e.g., parameter groupBasedBeamReporting), the UE may report, to the base station, CSI including information related to the 'simultaneous transmission capable beam pair' or the 'simultaneous reception and transmission capable beam pair'.

For example, the parameter groupBasedBeamReporting may be set to a first value or a second value (see Table 5 below). The first value (e.g., JointULandDL) may be related to the 'simultaneous reception and transmission capable beam pair'. The second value (e.g., ULOnly) may be related to the 'simultaneous transmission capable beam pair'.

Information related to the 'simultaneous reception and transmission capable beam pair' or the 'simultaneous transmission capable beam pair' may be based on two CRIs (or two SSBRIs) of each group of one or more groups.

For the 'simultaneous reception and transmission capable beam pair': resources (two CSI-RS resources or two SSB resources) based on two CRIs (or two SSBRIs) may be simultaneously received by the UE. In other words, two CSI-RSs (or two SSBs) based on the two CRIs (or two SSBRIs) may be simultaneously received by the UE. Further, the resources (two CSI-RS resources or two SSB resources) based on the two CRIs (or two SSBRIs) may be applied to simultaneous transmission based on spatial filters by the UE.

For the 'simultaneous transmission capable beam pair': the resources (two CSI-RS resources or two SSB resources) based on the two CRIs (or two SSBRIs) may be applied to simultaneous transmission based on spatial filters by the UE.

The spatial filters may refer to UL Tx spatial filters. The spatial filters may be determined based on the two CRIs (or two SSBRIs).

According to an embodiment, reporting configuration of the base station is the same as the existing method, but the UE may additionally report, to each group, an indicator for whether the simultaneous transmission is capable or incapable. In other words, the base station may perform group based beam reporting configuration from a DL perspective (e.g., groupBasedBeamReporting='enabled' or groupBasedBeamReporting-r17). In this instance, the UE may additionally report, to each group (e.g., resource group or beam group), an (1 bit) indicator for whether the simultaneous transmission is capable or incapable.

**[Table 4]**

| | |
|---|---|
| <TS38.214, V17.1.0> | |
| If the UE is configured with a *CSI-ReportConfig* with the higher layer parameter *reportQuantity* set to 'cri-RSRP', 'ssb-Index-RSRP', 'cri-RSRP-Capability[Set]Index' or 'ssb-Index-RSRP-Capability[Set]Index', | |
| | - if the UE is configured with the higher layer parameter *groupBasedBeamReporting* set to 'disabled', the UE is not required to update measurements for more than 64 CSI-RS and/or SSB resources, and the UE shall report in a single report *nrofReportedRS* (higher layer configured) different CRI or SSBRI for each report setting. |
| | - if the UE is configured with the higher layer parameter *groupBasedBeamReporting* set to 'enabled', the UE is not required to update measurements for more than 64 CSI-RS and/or SSB resources, and the UE shall report in a single reporting instance two different CRI or SSBRI for each report setting, where CSI- |
| | RS and/or SSB resources can be received simultaneously by the UE either with a single spatial domain receive filter, or with multiple simultaneous spatial domain receive filters. |
| | - if the UE is configured with the higher layer parameter *groupBasedBeamReporting-r17,* the UE is not required to update measurements for more than 64 CSI-RS and/or SSB resources, and the UE shall report in a single reporting instance *nrofReportedRSgroup,* if configured, group(s) of two CRIs or SSBRIs selecting one CSI-RS or SSB from each of the two CSI Resource Sets for the report setting, where CSI-RS and/or SSB resources of each group can be received simultaneously by the UE. |
| If the UE is configured with a *CSI-ReportConfig* with the higher layer parameter *reportQuantity* set to 'cri-SINR', 'ssb-Index-SINR', 'cri-SINR-Capability[Set]Index' or 'ssb-Index-SINR-Capability[Set]Index', | |
| | - if the UE is configured with the higher layer parameter *groupBasedBeamReporting* set to 'disabled', the UE shall report in a single report *nrofReportedRS* (higher layer configured) different CRI or SSBRI for each report setting. |
| | - if the UE is configured with the higher layer parameter *groupBasedBeamReporting* set to 'enabled', the UE shall report in a single reporting instance two different CRI or SSBRI for each report setting, where CSI-RS and/or SSB resources can be received simultaneously by the UE. |

Information related to the 'simultaneous transmission capable beam pair' or the 'simultaneous reception and transmission capable beam pair' may be reported based on Table 5 below.

**[Table 5]**

| | |
|---|---|
| If the UE is configured with a *CSI-ReportConfig* with the higher layer parameter *reportQuantity* set to 'cri-RSRP', 'ssb-Index-RSRP', 'cri-RSRP- Index' or 'ssb-Index-RSRP- Index', | |
| | - if the UE is configured with the higher layer parameter *groupBasedBeamReporting* set to 'disabled', the UE is not required to update measurements for more than 64 CSI-RS and/or SSB resources, and the UE shall report in a single report *nrofReportedRS* (higher layer configured) different CRI or SSBRI for each report setting. |
| | - if the UE is configured with the higher layer parameter *groupBasedBeamReporting* set to 'enabled', the UE is not required to update measurements for more than 64 CSI-RS and/or SSB resources, and the UE shall report in a single reporting instance two different CRI or SSBRI for each report setting, where CSI-RS and/or SSB resources can be received simultaneously by the UE either with a single spatial domain receive filter, or with multiple simultaneous spatial domain receive filters. |
| | - if the UE is configured with the higher layer parameter *groupBasedBeamReporting-r17,* the UE is not required to update measurements for more than 64 CSI-RS and/or SSB resources, and the UE shall report in a single reporting instance *nrofReportedGroups,* if configured, group(s) of two CRIs or SSBRIs selecting one CSI-RS or SSB from each of the two CSI Resource Sets for the report setting, where CSI-RS and/or SSB resources of each group can be received simultaneously by the UE. |
| | - if the UE is configured with the higher layer parameter *groupBasedBeamReporting-v18* set to *JointULandDL,* the UE is not required to update measurements for more than 64 CSI-RS and/or SSB resources, and the UE shall report in a single reporting instance *nrofReportedGroups-r18,* if configured, group(s) of two CRIs or SSBRIs selecting one CSI-RS or SSB from each of the two CSI Resource Sets for the report setting, where CSI-RS and/or SSB resources of each group can be received simultaneously and applied for simultaneous transmission with spatial filters by the UE subject to UE capability. |
| | - if the UE is configured with the higher layer parameter *groupBasedBeamReporting-v18* set to *ULOnly,* the UE is not required to update measurements for more than 64 CSI-RS and/or SSB resources, and the UE shall report in a single reporting instance *nrofReportedGroups-r18,* if configured, group(s) of two CRIs or SSBRIs selecting one CSI-RS or SSB from each of the two CSI Resource Sets for the report setting, where CSI-RS and/or SSB resources of each aroup can be applied for simultaneous transmission with spatial filters bv the UE subject to UE capability. |

The method 1 is a method in which the UE selects/reports a combination of STxMP panels and beams. On the other hand, a method in which the base station configures/designates a combination of STxMP panels or a candidate group of STxMP panels may be considered. Operations related to the method is specifically described in the following method 2.

### Method 2

A base station may designate/configure a specific C-ID pair/group to a UE in a beam report of the UE. The specific C-ID pair/group may include i) a pair/group in which STxMP is capable (STxMP capable pair/group) and/or ii) a pair/group in which STxMP is incapable (STxMP incapable pair/group).

The UE may report information on CRI/SSBRI corresponding to the C-ID pair/group to the base station.

Specifically, the following operations may be performed based on the method 2.

The base station may designate the specific C-ID pair/group based on a UE capability report of the UE. The UE may report preferred CRI(s)/SSBRI(s) to the base station when performing UL transmission through the corresponding panels (based on the specific C-ID pair/group).

For example, the base station may designate/configure STxMP capable C-ID pair/group to the UE. The UE may report CRI(s)/SSBRI(s) for the STxMP capable C-ID pair/group to the base station. The UE may also report beam quality values (e.g., L1-RSRP, L1-SINR) for the CRI(s)/SSBRI(s) to the base station.

The method 2 has the advantage in that a predefined beam report format can be utilized as it is if base station configuration/indication for the C-ID pair/group is added.

The following embodiments may be additionally applied to the proposed operation described above. Reception/measurement of the CRI(s)/SSBRI(s) reported by the UE may be performed based on the related/designated C-ID. Reception/measurement of DL RSs (CSI-RSs/SSBs) may be performed based on the C-ID (or panel(s) based on the C-ID) designated by the base station.

### Method 3

A base station may transmit configuration related to a beam reporting to a UE. In this instance, the configuration related to the beam reporting may include information on a configuration/indication to select CRIs/SSBRIs only from among STxMP capable combinations or STxMP incapable combinations. Based on the configuration/indication, the UE reports information on STxMP capable or incapable CRIs/SSBRIs to the base station. In this instance, the UE may also report beam quality values (e.g., L1-RSRP, L1-SINR) for the CRIs/SSBRIs to the base station.

The method 2 is a method in which the base station designates the C-ID pair/group to the UE. On the other hand, the method 3 is a method of introducing the configuration/indication to report the STxMP capable (incapable) CRI(s)/SSBRI(s).

The method 3 also has the advantage in that the existing beam report format can be utilized as it is by adding only an additional configuration/indication of the base station for the beam reporting (e.g., configuration/indication to select the CRIs/SSBRIs only from among the STxMP capable combinations).

The following embodiment may be considered for the operation of selecting/reporting CRI(s)/SSBRI(s) for each C-ID or panel in the method 1, the method 2 and/or the method 3. The base station may configure candidate resources for selection of the CRI(s)/SSBRI(s) to the UE.

The candidate resources may include candidate CSI-RS resources, SSB resources, and/or interference measurement resources (e.g., CSI-IM resources, NZP CSI-RS resources for interference measurement). The candidate resources may be configured in a grouped manner. For example, one or more resource groups may be configured, and each resource group may include candidate resources.

Based on the configured candidate resources, the UE may select/determine STxMP capable RS combinations as follows.

For example, the UE may select one resource from each resource group. The terminal may select RS combinations across a plurality of resource groups. In this case, each resource group may correspond to a unit (e.g., TRP, panel) that can generate only one reception beam at a time from a base station perspective.

For example, the UE may select resource(s) only from each resource group. In this case, each resource group may correspond to simultaneous reception capable beam combination through a plurality of beams from a base station perspective.

As an embodiment, two RS resource sets may be configured in Rel-17 beam group based reporting. In this instance, the operation based on the method 1, the method 2 or the method 3 may be performed. For example, the UE may report a C-ID corresponding to each RS resource set (Method 1). For example, the base station may configure/designate a C-ID corresponding to each RS resource set to the UE (Method 2). For example, the UE may select a STxMP capable RS combination within the same resource set or across two resource sets (e.g., one for each set) (Method 3).

In the present disclosure, the 'panel' may correspond to a 'TRP' that receives the signal and may correspond to a 'beam RS (set)', a 'CORESET pool', a 'PUCCH/SRS resource group', etc.

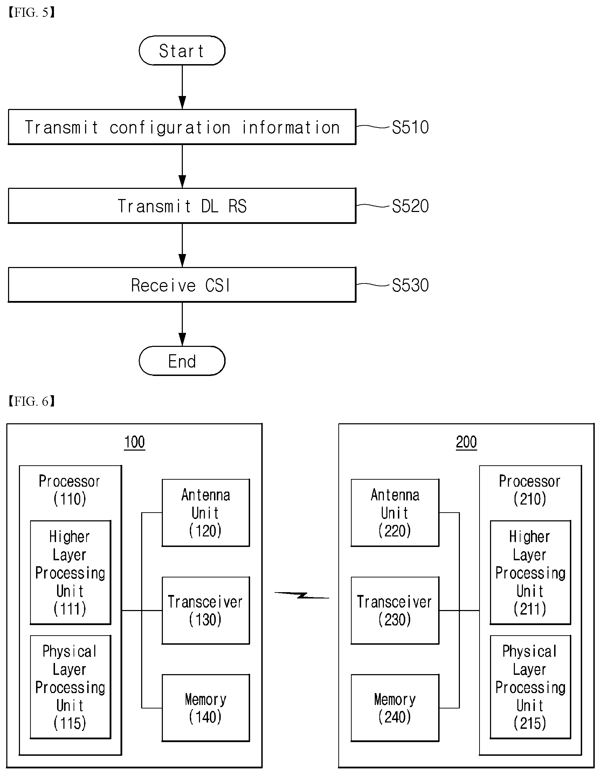

From an implementation perspective, the operations (e.g., operations based on at least one of the method 1, the method 2 or the method 3) of the base station/UE according to the above-described embodiments may be processed by a device (e.g., 100 and 200) of FIG. 6 described below.

The operations (e.g., operations based on at least one of the method 1, the method 2 or the method 3) of the base station/UE according to the above-described embodiments may be stored in a memory (e.g., memories 140 and 240 of FIG. 6) in the form of commands/programs (e.g., instructions, executable codes, etc.) for running at least one processor (e.g., processors 110 and 210 of FIG. 6).

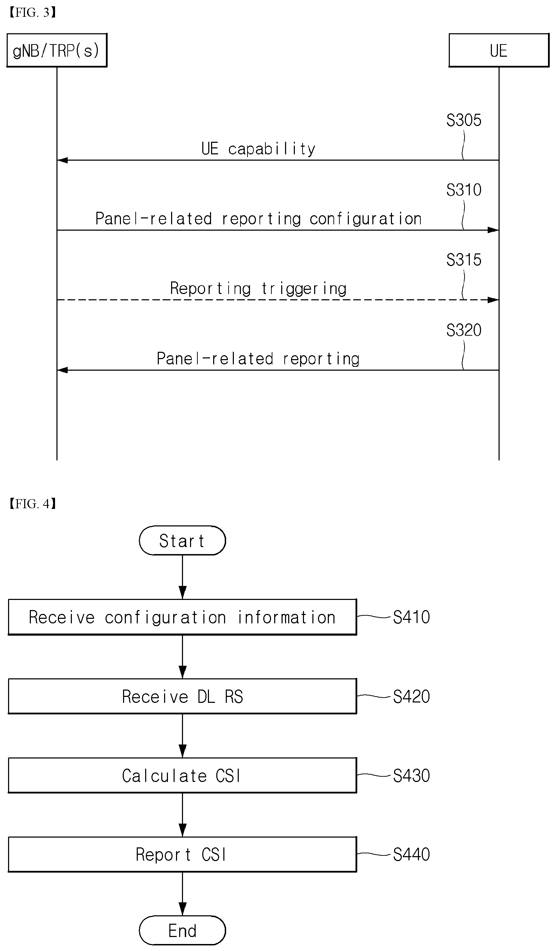

A signaling procedure based on the above-described embodiments is described in detail below with reference to FIG. 3.

FIG. 3 illustrates a signaling procedure according to an embodiment of the present disclosure.

More specifically, FIG. 3 illustrates an example of signaling between a user equipment (UE) and a base station (BS) based on the above-described proposed methods (e.g., the method 1, the method 2, the method 3).

The UE/BS is merely an example and can be applied by being replaced with various devices. FIG. 3 is merely for convenience of description and does not limit the scope of the present disclosure. Further, some step(s) illustrated in FIG. 3 may be omitted depending on situation and/or setting, etc.

It is assumed that the UE and/or the BS in FIG. 3 support multi-panel/TRP. The TRP/panel may be a unit including one or multiple antenna(s), antenna port(s), beam(s), and uplink/downlink RS/channel resource(s) of the UE.

For example, an uplink transmission panel may be identified based on a source RS (e.g., UL TCI, spatial relation) for an uplink channel/RS, and a downlink transmission TRP may be identified based on a source RS (e.g., DL TCI, QCL RS) for a downlink channel/RS. Specifically, a unit having a specific UL/DL resource set/group (ID) or a specific (panel-related) ID as a source RS may be identified.

A UE may report UE capability information to a BS, in S305. The UE capability information may include reporting information for C-ID(s) as described above, and a corresponding UE capability value may include information on the maximum number of supportable SRS ports.

The UE may receive a configuration related to beam and panel reporting from the BS, in S310. The configuration may include information on the number of CRI(s)/SSBRI(s) to be reported, measurement values to be reported (e.g., whether to report L1-RSRP or L1-SINR), report type information (e.g., whether it is an aperiodic report, a semi-persistent report on PUSCH, a semi-persistent report on PUCCH, or a periodic report), information related to reporting periodicity and timing (e.g., periodicity, slot offset, etc.), and an indicator for a reporting including a C-ID. In addition, a configuration for a beam/panel reporting method to which the proposed method(s) of the present disclosure are applied may be included.

After the beam and panel reporting related configuration in S310, the BS may perform a separate reporting triggering/activation indication (for semi-persistent or aperiodic report) on the UE, in S315.

The UE receiving the beam and panel reporting related configuration of S310 (and a related triggering/activation message of S315) may perform periodically/aperiodically a reporting related to the beam and the panel based on the configuration (and a triggering/activation indication), in S320. The reporting information may include C-ID(s) (for each CRI/SSBRI) as well as CRI(s)/SSBRI(s) and L1-RSRP(s)/L1-SINR(s). The proposed methods (e.g., the method 1, the method 2, the method 3) of the present disclosure may be applied to the beam/panel reporting operation.

As mentioned above, the BS/UE signaling and operation described above may be implemented by a device described below (e.g., devices 100 200 of FIG. 6). For example, the BS (e.g., TRP 1/TRP 2) may correspond to a first wireless device 100, and the UE may correspond to a second wireless device 200. In some cases, the reverse case may also be considered.

For example, the BS/UE signaling and operation described above may be processed by one or more processors (e.g., 110 and 210) of FIG. 6. The BS/UE signaling and operation described above may be stored in a memory (e.g., memories 140 and 240 of FIG. 6) in the form of a command/program (e.g., instructions, executable codes) for running at least one processor (e.g., 110 and 210) of FIG. 6.

Below, the above-described embodiments are described in detail from a perspective of operations of the UE and the base station with reference to FIGS. 4 and 5. Methods described below are merely distinguished for convenience of explanation. Thus, as long as the methods are not mutually exclusive, it is obvious that partial configuration of any method can be substituted or combined with partial configuration of another method.

FIG. 4 is a flow chart illustrating a method performed by a user equipment according to an embodiment of the present disclosure.

Referring to FIG. 4, a method performed by a user equipment (UE) in a wireless communication system according to an embodiment of the present disclosure includes a step S410 of receiving configuration information, a step S420 of receiving a downlink reference signal (DL RS), a step S430 of computing channel state information (CSI), and a step S440 of reporting the CSI.

In the step S410, the UE receives configuration information related to channel state information (CSI) from a base station. The configuration information may include information based on at least one of the method 1, the method 2 and/or the method 3 described above.

The configuration information may include at least one of i) CSI-interference management (IM) resource related information, ii) CSI measurement configuration related information, iii) CSI resource configuration related information, iv) CSI-RS resource related information, or v) CSI report configuration related information. For example, at least one of the i) to v) may include information based on at least one of the method 1, the method 2 and/or the method 3 described above.

For example, the configuration information may be based on the CSI report configuration related information (e.g., CSI-ReportConfig IE). The CSI report configuration related information may include the report configuration (e.g., configuration/parameter related to the group based beam reporting) of the method 1.

According to an embodiment, the configuration information may include information related to the group based beam reporting (e.g., parameter groupBasedBeamReporting). The present embodiment may be based on the method 1. For example, types of resource indicators to be reported by the UE may be determined based on the information related to the group based beam reporting.

According to an embodiment, the configuration information may include a report quantity related to the CSI.

For example, the report quantity may be set to 1)'cri'-'RI'-'PMI'-'CQI', 2) 'cri'-'RI'-'i1', 3) 'cri'-'RI'-'il'-'CQI', 4) 'cri'-'RI'-'CQI', 5) 'cri'-'RSRP', 6) 'ssb-Index'-'RSRP' 7) 'cri'-'RI'-'Ll'-'PMI'-'CQI', 8) 'cri'-'SINR', 9) 'ssb-Index'-'SINR', 10) 'cri' -'RSRP' -'Index', 11) 'ssb-Index'-'RSRP'-'Index', 12) 'cri'-'SINR'-'Index' or 13) 'ssb-Index'-*SINR'-'Index'.

Based on the 'report quantity', the CSI may include at least one of 1) Channel Quality Indicator (CQI), 2) Precoding Matrix Indicator (PMI), 3) CSI-RS Resource Indicator (CRI), 4) SSB Resource block Indicator (SSBRI), 5) Layer Indicator (LI), 6) Rank Indicator (RI), 7) Layer 1-Reference Signal Received Strength (L1-RSRP), 8) Layer 1-signal to noise and interference ratio (L1-SINR) and/or 9) CapabilityIndex or Index (an index of UE capability value set).

The CSI may include one or more parameters based on each of the 1) to 9). For example, the CSI may include one or more CRIs based on the 3). For example, the CSI may include one or more CRIs, one or more SSBRIs, and one or more indexes based on the 3), 4) and 9).

In this instance, the report quantity may be configured so that the parameter(s) related to the group based beam reporting is reported. Specifically, the report quantity may be set to i) 'cri'-'RSRP (Reference Signal Received Power)', ii) 'ssb-Index'-'RSRP', iii) 'cii'-'RSRP'-'Index' or iv) 'ssb-Index'-'RSRP'-'Index'. The 'cri' is CSI-RS Resource Indicator (CRI). The 'ssb-Index' is SS/PBCH Block (SSB) Resource Indicator (SSBRI). The 'Index' is an index of a UE capability value set. The maximum supported number of SRS antenna ports may be indicated based on the index of the UE capability value set.

In the step S420, the UE receives at least one downlink reference signal (DL RS) from the base station.

The at least one DL RS may be based on a Synchronization Signal/Physical Broadcast Channel block (SS/PBCH block) (SSB) and/or Channel State Information-Reference Signal (CSI-RS).

For example, the at least one DL RS may include CSI-RSs and/or SSBs based on the above-described two CSI resource sets.

In the step S430, the UE computes the CSI based on a measurement for the at least one DL RS.

Parameter(s) included in the CSI may be determined/computed based on the measurement for the at least one DL RS. The parameter(s) included in the CSI may be parameter(s) based on the 'report quantity (reportquantity)'.

In the step S440, the UE reports the CSI to the base station.

The CSI may be reported periodically, semi-persistently or aperiodically.

The CSI may be transmitted on a physical uplink control channel (PUCCH) or a physical uplink shared channel (PUSCH).

The periodic CSI reporting is performed on a short PUCCH or a long PUCCH. The semi-persistent (SP) CSI reporting is performed on the short PUCCH, the long PUCCH, or the PUSCH. The aperiodic CSI reporting is performed on the PUSCH and is triggered by DCI. In this case, information related to a trigger of the aperiodic CSI reporting may be transmitted/indicated/configured via MAC-CE.

Based on the base station configuration of the method 1, STxMP capable beam pair ('simultaneous reception and transmission capable beam pair' or 'simultaneous transmission capable beam pair') may be reported. The beam pair may be reported for each of one or more groups. The beam pair of each group may be based on two CRIs or two SSBRIs. Embodiments related to this are described in detail below.

According to an embodiment, the CSI may include resource indicators related to each of the one or more groups. The present embodiment may be based on the method 1. In this instance, the CSI may further include the index of the UE capability value set. A reporting instance related to the resource indicators may be the same as or different from a reporting instance related to the index of the UE capability value set.

For example, the number of the one or more groups (e.g., 1, 2, 3 or 4, ...) may be set based on the configuration information. Specifically, the number of the one or more groups may be determined based on parameter nrofReportedGroups included in the configuration information. The parameter nrofReportedGroups represents the number of (resource) groups reported per CSI-report.

For example, the resource indicators may be reported based on a first reporting instance (e.g., first CSI report), and the index of the UE capability value set may be reported based on a second reporting instance (e.g., second CSI report). The CSI may include CSI field(s) related to the first reporting instance and CSI field(s) related to the second reporting instance.

For example, the resource indicators and the index of the UE capability value set may be based on the same reporting instance. The CSI may include CSI field(s) related to the same reporting instance.

According to an embodiment, the resource indicators may be related to simultaneous transmission based on spatial filters by the UE. The spatial filters may refer to UL Tx spatial filters.

According to an embodiment, the resource indicators may include i) two CRIs or ii) two SSBRIs.

The resource indicators may be resource indicators related to simultaneous reception and simultaneous transmission by the UE or resource indicators related to simultaneous transmission by the UE. This is described in detail below.

For example, CSI-RS resources and/or SSB resources of each group of the one or more groups may be applied to the simultaneous transmission. In other words, when the UE performs uplink transmission based on the spatial filters, the CSI-RS resources and/or the SSB resources of each group may be applied. According to an embodiment, the spatial filters (or UL Tx spatial filters) may be determined based on the CSI-RS resources and/or the SSB resources of each group. The determined spatial filters may be simultaneously applied.

For example, the CSI-RS resources and/or the SSB resources of each group may be simultaneously received by the UE. Specifically, CSI-RSs and/or SSBs based on the CSI-RS resources and/or the SSB resources of each group may be simultaneously received by the UE. According to an embodiment, a beam pair (or spatial domain receive filters) that can be simultaneously received by the UE may be determined based on the CSI-RS resources and/or the SSB resources of each group.

According to an embodiment, the simultaneous transmission may be performed based on a UE capability. The UE capability may be related to the maximum supported number of SRS antenna ports.

According to an embodiment, the CSI including first resource indicators or second resource indicators related to each group may be reported based on the information related to the group based beam reporting.

Resources (e.g., two CSI-RS resources or two SSB resources) based on the first resource indicators may be simultaneously received by the UE and applied to the simultaneous transmission.

Resources based on the second resource indicators may be applied to the simultaneous transmission.

The information related to the group based beam reporting (e.g., parameter groupBasedBeamReporting) may represent a first value (e.g., JointULandDL) related to a reporting of the first resource indicators or a second value (e.g., ULOnly) related to a reporting of the second resource indicators.

For example, based on the parameter groupBasedBeamReporting being set to the first value (e.g., JointULandDL), the UE reports CSI including the first resource indicators. For example, based on the parameter groupBasedBeamReporting being set to the second value (e.g., ULOnly), the UE reports CSI including the second resource indicators.

According to an embodiment, the resource indicators may be based on two resource indicators. Based on the two resource indicators, one CSI-RS or one SSB may be selected from each of two CSI resource sets.

The operations based on the above-described steps S410 to S440 may be implemented by a device of FIG. 6. For example, a UE 200 may control one or more transceivers 230 and/or one or more memories 240 to perform the operations based on the steps S410 to S440.

Below, the above-described embodiments are described in detail from a perspective of base station operation.

Steps S510 to S530 described below correspond to the steps S410 to S440 described with reference to FIG. 4. Considering the above correspondence, redundant description is omitted. That is, the detailed description of the base station operation described below can be replaced with the description/embodiment of FIG. 4 corresponding to the base station operation. For example, the description/embodiment of the steps S410 and S420 in FIG. 4 may be additionally applied to the base station operation of the steps S510 and S520 described below. For example, the description/embodiment of the steps S430 and S440 in FIG. 4 may be additionally applied to the base station operation of the step S530 described below.

FIG. 5 is a flow chart illustrating a method performed by a base station according to another embodiment of the present disclosure.

Referring to FIG. 5, a method performed by a base station in a wireless communication system according to another embodiment of the present disclosure includes a step S510 of transmitting configuration information, a step S520 of transmitting a downlink reference signal (DL RS), and a step S530 of receiving channel state information (CSI).

In the step S510, the base station transmits, to a UE, configuration information related to channel state information (CSI).

In the step S520, the base station transmits at least one DL RS to the UE.

In the step S530, the base station receives the CSI from the UE. The CSI may be computed based on a measurement of the UE for the at least one DL RS.

The operation based on the above-described steps S510 to S530 may be implemented by the device of FIG. 6. For example, a base station 100 may control one or more transceivers 130 and/or one or more memories 140 to perform the operation based on the steps S510 to S530.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information related to Channel State Information (CSI), the configuration information including information related to a group based beam reporting;
receiving at least one DownLink-Reference Signal (DL RS),
computing the CSI based on a measurement for the at least one DL RS; and
reporting the CSI,
wherein the CSI includes resource indicators related to each group of one or more groups, and
wherein the resource indicators are related to simultaneous transmission based on spatial filters by the UE.

2. The method of claim 1, wherein the configuration information includes a report quantity related to the CSI, and
wherein the report quantity is set to i) 'cri'-'RSRP (Reference Signal Received Power)', ii) 'ssb-Index'-'RSRP', iii) 'cri'-'RSRP'-'Index' or iv) 'ssb-Index'-'RSRP'-'Index'.

3. The method of claim 2, wherein the cri is a CSI-RS Resource Indicator (CRI), and the ssb-Index is a SS/PBCH Block Resource Indicator (SSBRI),
wherein the Index is an index of a UE capability value set, and
wherein a maximum supported number of SRS antenna ports is indicated based on the index of the UE capability value set.

4. The method of claim 3, wherein the resource indicators include i) two CRIs or ii) two SSBRIs.

5. The method of claim 4, wherein CSI-RS resources and/or SSB resources of the each group are able to be applied for the simultaneous transmission.

6. The method of claim 4, wherein CSI-RS resources and/or SSB resources of the each group are able to be received simultaneously by the UE.

7. The method of claim 3, wherein the simultaneous transmission is performed based on a UE capability.

8. The method of claim 7, wherein the UE capability is related to the maximum supported number of SRS antenna ports.

9. The method of claim 3, wherein the CSI further includes the index of the UE capability value set.

10. The method of claim 1, wherein, based on the information related to the group based beam reporting, the CSI including first resource indicators or second resource indicators related to the each group is reported,
wherein resources based on the first resource indicators are able to be received simultaneously by the UE and be applied for the simultaneous transmission, and
wherein resources based on the second resource indicators are able to be applied for the simultaneous transmission.

11. The method of claim 10, wherein the information related to the group based beam reporting represents a first value related to a reporting of the first resource indicators or a second value related to a reporting of the second resource indicators.

12. The method of claim 1, wherein the resource indicators are based on two resource indicators, and wherein, based on the two resource indicators, one CSI-RS or one SSB is selected from each of two CSI resource sets.

13. A user equipment (UE) operating in a wireless communication system, the UE comprising:
one or more transceivers;
one or more processors; and
one or more memories operably connectable to the one or more processors and storing instructions that configure the one or more processors to perform operations based on being executed by the one or more processors,
wherein the operations comprise:
receiving configuration information related to Channel State Information (CSI), the configuration information including information related to a group based beam reporting;
receiving at least one DownLink-Reference Signal (DL RS);
computing the CSI based on a measurement for the at least one DL RS; and
reporting the CSI,
wherein the CSI includes information for resource indicators related to each group of one or more groups, and
wherein the resource Indicators are related to simultaneous transmission based on spatial filters by the UE.

14. A device comprising:
one or more memories; and
one or more processors operably connected to the one or more memories,
wherein the one or more memories include instructions that configure the one or more processors to perform operations based on being executed by the one or more processors,
wherein the operations comprise:
receiving configuration information related to Channel State Information (CSI), the configuration information including information related to a group based beam reporting;
receiving at least one DownLink-Reference Signal (DL RS);
computing the CSI based on a measurement for the at least one DL RS; and
reporting the CSI,
wherein the CSI includes information for resource indicators related to each group of one or more groups, and
wherein the resource indicators are related to simultaneous transmission based on spatial filters by the UE.

15. One or more non-transitory computer readable mediums storing one or more instructions,
wherein the one or more instructions executable by one or more processors configure the one or more processors to perform operations,
wherein the operations comprise:
receiving configuration information related to Channel State Information (CSI), the configuration information including information related to a group based beam reporting;
receiving at least one DownLink-Reference Signal (DL RS);
computing the CSI based on a measurement for the at least one DL RS; and
reporting the CSI,
wherein the CSI includes information for resource indicators related to each group of one or more groups, and
wherein the resource indicators are related to simultaneous transmission based on spatial filters by the UE.

16. A method performed by a base station in a wireless communication system, the method comprising:
transmitting configuration information related to Channel State Information (CSI), the configuration information including information related to a group based beam reporting;
transmitting at least one DownLink-Reference Signal (DL RS); and
receiving the CSI,
wherein the CSI is computed on based on a measurement of a user equipment (UE) for the at least one DL RS,
wherein the CSI includes information for resource indicators related to each group of one or more groups, and
wherein the resource indicators are related to simultaneous transmission based on spatial filters by the UE.

17. A base station operating in a wireless communication system, the base station comprising:
one or more transceivers;
one or more processors; and
one or more memories operably connectable to the one or more processors and storing instructions that configure the one or more processors to perform operations based on being executed by the one or more processors,
wherein the operations comprise:
transmitting configuration information related to Channel State Information (CSI), the configuration information including information related to a group based beam reporting;
transmitting at least one DownLink-Reference Signal (DL RS); and
receiving the CSI,
wherein the CSI is computed on based on a measurement of a user equipment (UE) for the at least one DL RS,
wherein the CSI includes information for resource indicators related to each group of one or more groups, and
wherein the resource indicators are related to simultaneous transmission based on spatial filters by the UE.
